# EUROPÄISCHE PATENTANMELDUNG

(11) **EP 4 019 329 A1**
(43) Veröffentlichungstag der Anmeldung: **29.06.2022**
(21) Anmeldenummer: 21215027.0
(22) Anmeldetag: 16.12.2021
(51) Int. Cl.: B60Q 1/24, B60Q 1/26, C08J 7/04, F21S 43/00

(54) **DURCHLEUCHTBARES VERKLEIDUNGSTEIL FÜR EIN KRAFTFAHRZEUG UND VERFAHREN ZUR HERSTELLUNG EINES VERKLEIDUNGSTEILS**

(30) Priorität: 21.12.2020 DE 102020134485
(71) Anmelder: REHAU Automotive SE & Co. KG, 95111 Rehau (DE)
(72) Erfinder: Göschel, Rick, 95183 Feilitzsch (DE)

(57) **Zusammenfassung**

Die Erfindung betrifft ein durchleuchtbares Verkleidungsteil für ein Kraftfahrzeug (V) umfassend einen Grundkörper (1) aus einem transluzenten oder transparenten Polymermaterial, welches für Spektralbereiche des sichtbaren Lichts mit einer geringen Absorption durchstrahlbar ist, und wenigstens eine auf dem Grundkörper (1) aufgebrachte farbgebende Beschichtung (2). Teil der Erfindung ist ferner ein Verfahren zur Herstellung eines derartigen Verkleidungsteils.

## Beschreibung

Die vorliegende Erfindung betrifft ein durchleuchtbares Verkleidungsteil für ein Kraftfahrzeug umfassend einen Grundkörper aus einem transluzenten oder transparenten Polymermaterial, welches für Spektralbereiche des sichtbaren Lichts mit einer geringen Absorption durchstrahlbar ist, und umfassend wenigstens eine auf dem Grundkörper aufgebrachte farbgebende Beschichtung, wobei die farbgebende Beschichtung vorzugsweise durch eine Lackschicht oder eine Lackfolie gebildet ist, wobei die farbgebende Beschichtung die Spektralbereiche des sichtbaren Lichts weitestgehend absorbiert und, wobei zur Durchleuchtung des Grundkörpers die farbgebende Beschichtung bereichsweise eine Vielzahl von punktförmigen Perforationen aufweist, die die farbgebende Beschichtung vollständig durchdringen und, wobei über der perforierten farbgebenden Beschichtung eine die farbgebende Beschichtung und die Perforationen versiegelnde Klarlackschicht, welche für Spektralbereiche des sichtbaren Lichts mit einer geringen Absorption durchstrahlbar ist, aufgebracht ist.

Ein entsprechendes Verkleidungsteil für ein Kraftfahrzeug kann der EP 3 632 749 A1 entnommen werden.

Hauptproblematik bei der Herstellung von diesen gattungsgemäßen durchleuchtbaren Verkleidungsteilen ist der Zielkonflikt zum einen die Größe der Perforationen so zu wählen, dass diese zumindest auf eine größere Entfernung mit dem bloßen Auge nicht erkennbar sind. Und zum anderen die Größe und Verteilung der Perforationen nicht so klein werden zu lassen, dass der die Klarlackschicht bildende Klarlack die Perforationen nicht zu füllen vermag. Bei einer unzureichenden Füllung der Perforationen mit dem Klarlack der Klarlackschicht kommt es zu Einfallstellen im Bereich der Perforationen, die sich sowohl auf das optische Erscheinungsbild als auch auf die Durchstrahlbarkeit des Verkleidungsteils negativ auswirken. Die in dem genannten Stand der Technik angegebene Verteilung und Größe der Perforationen wirkt diesem Problem zielführend entgegen. Es besteht jedoch ein Bedarf zusätzlich andere Verteilungen und Größen für die Perforationen verwenden zu können Die Erfindung stellt sich daher die Aufgabe ein Verkleidungsteil mit den eingangs beschriebenen Merkmalen anzugeben, das gegenüber dem Stand der Technik mit dem bloßen Auge schwer erkennbare Perforationen bei gleichzeitig gleichmäßiger Ausbildung der Klarlackschicht aufweist, ohne eine bestimmte Verteilungen und Größe für die Perforationen einhalten zu müssen.

Erfindungsgemäß wird diese Aufgabe gelöst durch ein durchleuchtbares Verkleidungsteil für ein Kraftfahrzeug umfassend:
- einen Grundkörper aus einem transluzenten oder transparenten Polymermaterial, welches für Spektralbereiche des sichtbaren Lichts mit einer geringen Absorption durchstrahlbar ist, und
- wenigstens eine auf dem Grundkörper aufgebrachte farbgebende Beschichtung, wobei die farbgebende Beschichtung vorzugsweise durch eine Lackschicht oder eine Lackfolie gebildet ist, wobei die farbgebende Beschichtung die Spektralbereiche des sichtbaren Lichts weitestgehend absorbiert, und wobei zur Durchleuchtung des Grundkörpers die farbgebende Beschichtung bereichsweise eine Vielzahl von, vorzugsweise punktförmigen, Perforationen aufweist, die die farbgebende Beschichtung vollständig durchdringen, und wobei über der perforierten farbgebenden Beschichtung eine die farbgebende Beschichtung und die Perforationen versiegelnde Klarlackschicht, welche für Spektralbereiche des sichtbaren Lichts mit einer geringen Absorption durchstrahlbar ist, aufgebracht ist, wobei erfindungsgemäß für die Klarlackschicht ein Klarlacksystem verwendet ist, dessen Anteil an flüchtigen Lösemitteln unterhalb von 35 Vol.% liegt.

Aufgrund des hohen Feststoffanteils schafft es ein derartiges Lacksystem die in den Perforationen auftretenden Stufen, in der Regel sind diese Stufen im Bereich von 20 µm bis 100 µm tief im Vergleich zur Oberfläche der farbgebenden Beschichtung, auszugleichen und bietet damit die Möglichkeit trotz Perforation eine homogene äußere Oberfläche der Klarlackschicht zu erzeugen.

Der Durchmesser D der Perforationen (bei punktförmigen Perforationen) kann weiterhin in einem Bereich von 50 µm bis 500 µm, bevorzugt in einem Bereich von 175 µm bis 300 µm, liegen. Der Abstand A zwischen den Mittelpunkten M zueinander benachbarter Perforationen kann in einem Bereich zwischen dem 1,0-fachen bis 5,0-fachen, bevorzugt in einem Bereich zwischen dem 1,5-fachen bis 4,0-fachen des Durchmessers D der benachbarten Perforationen liegen.

Zwischen dem Grundkörper und der farbgebenden Beschichtung kann zusätzlich eine Haftvermittlerschicht oder können zusätzlich Haftvermittlerschichten angeordnet sein. Zwischen dem Grundkörper und der farbgebenden Beschichtung oder der Haftvermittlerschicht kann zusätzlich oder ergänzend eine Grundierschicht oder können zusätzlich oder ergänzend Grundierschichten angeordnet sein. Hierbei kann die Vielzahl von, vorzugsweise punktförmigen, Perforationen auch die Haftvermittlerschicht oder die Haftvermittlerschichten oder die Grunddierschicht oder die Grundierschichten vollständig durchdringen.

Die Dicke der Klarlackschicht kann im Bereich von 30 µm bis 150 µm, bevorzugt im Bereich von 40 µm bis 150 µm, bevorzugt im Bereich von 70 µm bis 110 µm, bevorzugt im Bereich von 50 µm bis 130 µm, weiter bevorzugt im Bereich von 70 µm bis 110 µm liegen.

Das Klarlacksystem kann insbesondere ein UV-härtendes Klarlacksystem sein. UVhärtende Klarlacksysteme werden durch Ultraviolett (UV)-Strahlung zur Aushärtung gebracht.

Über der Klarlackschicht kann eine weitere Klarlackschicht angeordnet sein, wobei für die weitere Klarlackschicht ein weiteres Klarlacksystem verwendet ist, dessen Anteil an flüchtigen Lösemitteln oberhalb von 40 Vol.% liegt, bevorzugt oberhalb von 45 Vol.% liegt. Auch in diesem Fall kann das Klarlacksystem ein UV-härtendes Klarlacksystem sein.

Das transluzente oder transparente Polymermaterial des Grundkörpers kann bevorzugt Polypropylen und/oder Polycarbonat und/oder Polyethylenterephthalat und/oder Polycarbonat und/oder Acrylnitril-Butadien-Styrol und/oder Polymethylmethacrylat und/oder Polyamid enthalten oder hieraus gebildet sein.

Das transluzente oder transparente Polymermaterial des Grundkörpers kann zusätzlich einen Füllstoff aufweisen. Der Füllstoff kann Wollastonit und/oder amorphes Siliziumdioxid und/oder Cristobalit und/oder Feldspat und/oder Quarzgut und/oder Glas und/oder Glasfasern umfassen.

Der Füllstoff kann bevorzugt faserförmig und/oder nadelförmig sein. Insbesondere faserförmiges und/oder nadelförmiges Wollastonit hat sich als bevorzugt geeignet erwiesen.

Bevorzugt beträgt der Gehalt an Talkum und/oder Kohlenstoff und/oder Titandioxid in dem Füllstoff allein oder in Summe weniger als 10 Vol.%, bevorzugt weniger als 5 Vol.%, weiter bevorzugt weniger als 2 Vol.%, noch weiter bevorzugt weniger als 1 Vol.%.

Der Füllstoffgehalt des Füllstoffs in dem transluzenten oder transparenten Polymermaterial des Grundkörpers weißt bevorzugt einen Wert von 10 Vol.% bis 30 Vol.%, weiter bevorzugt von 15 Vol.% bis 20 Vol.% auf. Vorstehende Wertebereiche stellen das Optimum zwischen geringe Absorption für Spektralbereiche des sichtbaren Lichts und gleichzeitig ausreichend geringer Wärmeausdehnung und hoher Schlagzähigkeit dar.

Das transluzente oder transparente Polymermaterial des Grundkörpers ist bevorzugt ein für wenigstens eine Laserwellenlänge transparentes Material. Dies bedeutet insbesondere, dass das Polymermaterial so gewählt ist, dass es von wenigstens einem herkömmlichen in der Lasermaterialbearbeitung eingesetzten Lasersystem bzw. dessen verwendeter Laserwellenlänge durchstrahlbar ist, also die Energie der Laserstrahlung nicht signifikant in das Polymermaterial eingebracht oder eingekoppelt wird.

Für den Fall, dass die farbgebende Beschichtung durch eine Lackfolie gebildet ist, kann diese Lackfolie mehrschichtig aufgebaut sein. Hierbei kann die Lackfolie wenigstens eine Trägerfolie, bevorzugt aus einem transluzenten oder transparenten Material, welches für Spektralbereiche des sichtbaren Lichts mit einer geringen Absorption durchstrahlbar ist, und wenigsten eine auf der Trägerfolie angeordnete farbgebende Lackschicht umfassen. Die Lackschicht auf der Trägerfolie kann eine Dicke im Bereich von 5 µm bis 100 µm, bevorzugt im Bereich von 10 µm bis 60 µm aufweisen. Die Trägerfolie selbst kann eine Dicke im Bereich von 50 µm bis 1000 µm, bevorzugt im Bereich von 150 µm bis 600 µm aufweisen.

Die Perforationen können regelmäßig und/oder versetzt zueinander angeordnet sein. Es ist jedoch auch denkbar, dass die Perforationen untereinander keinen einheiltich gleichen Abstand aufweisen.

Zusätzlich kann eine Maskierungsschicht vorgesehen sein. Die Maskierungsschicht kann insbesondere zwischen dem Grundkörper und der farbgebenden Beschichtung und/oder auf der Rückseite des Grundkörpers angeordnet sein kann. Bei der Verwendung einer Lackfolie als farbgebender Beschichtung kann die Maskierungsschicht insbesondere auf der der Sichtseite der Folie gegenüberliegenden Rückseite der Lackfolie angeordnet sein. Die Maskierungsschicht weist im Bereich der Perforationen lokal Bereiche auf, die für Spektralbereiche des sichtbaren Lichts mit einer geringen Absorption durchstrahlbar ist. Diese Bereiche können insbesondere durch Ausnehmungen in der Maskierungsschicht gebildet sein. Die Maskierungsschicht ist ansonsten selbstredend für den Spektralbereich des sichtbaren Lichts weitestgehend intransparent und/oder undurchlässig. Die Maskierungsschicht kann insbesondere als Folie, als Schicht einer Folie oder im Siebdruckverfahren, einem Tampondruckverfahren, einem herkömmlichen Streich- Tauch, oder Sprühlackierverfahren oder mit einem Tintenstrahldruckverfahren aufgebracht sein.

Der Grundkörper weist bevorzugt eine Wandstärke im Bereich von 0,8 mm bis 4,5 mm auf.

Auf der Klarlackschicht kann eine zusätzliche Schutzschicht vorgesehen sein, wobei die zusätzliche Schutzschicht insbesondere ein Silan oder eine Silanverbindung umfassen kann.

Unter einer farbgebenden Beschichtung wird vorliegend auch eine den Farbton weiß oder den Farbton schwarz hervorrufende Beschichtung verstanden.

Die farbgebende Beschichtung muss nicht zwingend aus einer einzelnen Schicht bestehen, sondern kann in sich aus mehreren Schichten gebildet sein. Insbesondere bei einer Lackschicht als farbgebende Beschichtung muss die Lackschicht nicht zwingend aus einer einzelnen Schicht bestehen, sondern kann in sich aus mehreren Schichten gebildet sein.

Das Verkleidungsteil ist bevorzugt ein Außenverkleidungsteil, insbesondere eine Stoßfängerverkleidung oder eine Kühlerverkleidung oder eine Heckklappenverkleidung oder eine Säulenverkleidung oder eine Türverkleidung oder eine Kotflügelverkleidung oder eine Dachverkleidung oder ein Spoiler eines Kraftfahrzeuges, oder ist ein Bauteil oder eine Baugruppe oder ein Bestandteil der vorgenannten Teile.

Teil der Erfindung ist ferner ein System aus einem durchleuchtbaren Verkleidungsteil wie vorstehend beschrieben oder nach einem der Ansprüche 1 bis 6 und einem hinter der bestimmungsgemäßen Sichtseite des Grundkörpers angeordneten Leuchtelement. Der bestimmungsgemäßen Sichtseite des Grundkörpers entspricht bei dem System diejenige Seite des Grundkörpers auf welcher die farbgebende Beschichtung und die Klarlacksicht aufgebracht sind.

Das Leuchtelement weist bevorzugt eine Mindestleuchtstärke von 500 cd/m² auf.

Ein Verfahren zur Herstellung eines durchleuchtbaren Verkleidungsteils, insbesondere eines durchleuchtbaren Verkleidungsteils wie vorstehend beschrieben oder nach einem der Ansprüche 1 bis 6, umfasst die folgenden Schritte:
- Bereitstellen eines Grundkörpers aus einem transluzenten oder transparenten Polymermaterial, welches für Spektralbereiche des sichtbaren Lichts mit einer geringen Absorption durchstrahlbar ist, und
- Aufbringen wenigstens einer farbgebenden Beschichtung auf dem Grundkörper, wobei die farbgebende Beschichtung vorzugsweise durch eine Lackschicht oder eine Lackfolie gebildet ist, wobei die farbgebende Beschichtung die Spektralbereiche des sichtbaren Lichts weitestgehend absorbiert,
- Einbringen einer Vielzahl von, vorzugsweise punktförmigen, Perforationen in die farbgebende Beschichtung, die die farbgebende Beschichtung vollständig durchdringen um eine Durchleuchtung des Grundkörpers zu ermöglichen,
- Aufbringen einer die farbgebende Beschichtung und die eingebrachten Perforationen versiegelnden Klarlackschicht über der perforierten farbgebenden Beschichtung, wobei die Klarlackschicht für Spektralbereiche des sichtbaren Lichts mit einer geringen Absorption durchstrahlbar ist,
wobei für die Klarlackschicht ein Klarlacksystem verwendet wird, dessen Anteil an flüchtigen Lösemitteln unterhalb von 35 Vol.% liegt.

Über der Klarlackschicht kann eine weitere Klarlackschicht angeordnet sein, wobei für die weitere Klarlackschicht ein weiteres Klarlacksystem verwendet wird, dessen Anteil an flüchtigen Lösemitteln oberhalb von 40 Vol.% liegt, bevorzugt oberhalb von 45 Vol.% liegt.

In beiden Fällen kann das Klarlacksystem ein UV-härtendes Klarlacksystem sein.

Beim Einbringen von punktförmigen Perforationen kann der Durchmesser D der Perforationen so gewählt werden, dass dieser in einem Bereich von 50 µm bis 500 µm, bevorzugt in einem Bereich von 175 µm bis 300 µm, liegt und, wobei der Abstand A zwischen den Mittelpunkten M zueinander benachbarter Perforationen so gewählt wird, dass dieser Abstand A in einem Bereich zwischen dem 1,0-fachen bis 5,0 fachen, bevorzugt in einem Bereich zwischen dem 1,5-fachen bis 4,0-fachen des Durchmessers D der benachbarten Perforationen liegt.

Vorliegend werden unter punktförmigen Perforationen neben kreisförmigen Geometrien auch von einer reinen Kreisform abweichende Geometrien verstanden.

Der Schritt des Einbringens der punktförmigen Perforationen kann mittels eines Laserstrahls oder mittels mehrerer Laserstrahlen erfolgen.

Der Schritt des Bereitstellens des Grundkörpers kann ein Spritzgussverfahren oder ein Thermoformungsverfahren umfassen.

Im Folgenden wird die Erfindung anhand lediglich Ausführungsbeispiele darstellender Zeichnungen erläutert. Es zeigen schematisch:
- Fig. 1: eine schematische Darstellung der Teil-Außenansicht eines an einem Kraftfahrzeug montierten erfindungsgemäßen Verkleidungsteils;
- Fig. 2-3: Schnittdarstellungen durch ein erfindungsgemäßes Verkleidungsteil und System;
- Fig. 4: eine schematische Draufsicht auf die Sichtseite des Schichtaufbaus eines erfindungsgemäßen durchleuchtbaren Verkleidungsteils;
- Fig. 5: eine weitere schematische Draufsicht auf die Sichtseite des Schicht-aufbaus eines erfindungsgemäßen durchleuchtbaren Verklei-dungsteils.

In den Figuren werden gleiche oder funktionsgleiche Elemente mit den gleichen Bezugszeichen versehen.

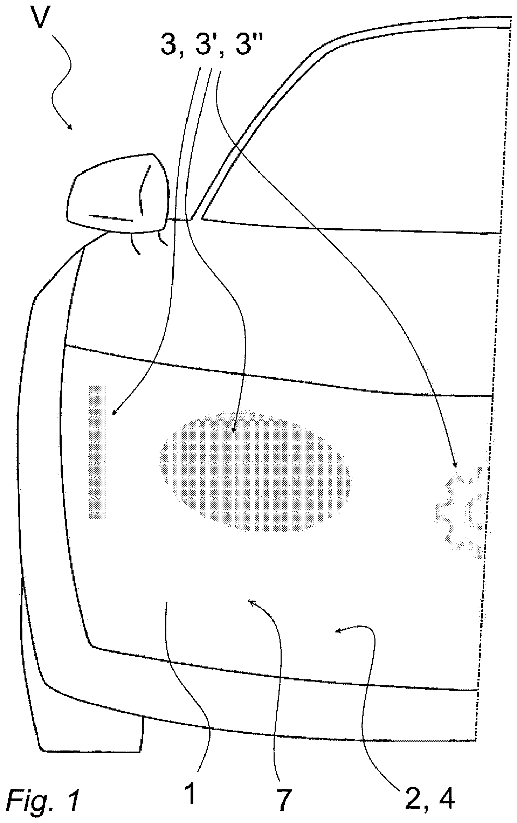

Die Fig. 1 zeigt eine Teil-Außenansicht der Sichtseite 7 eines Kraftfahrzeugs V mit einem erfindungsgemäßen durchleuchtbaren Verkleidungsteil für das Kraftfahrzeug V umfassend:
- einen Grundkörper 1 aus einem transluzenten oder transparenten Polymermaterial, welches für Spektralbereiche des sichtbaren Lichts mit einer geringen Absorption durchstrahlbar ist, und
- wenigstens eine auf dem Grundkörper 1 aufgebrachte farbgebende Beschichtung 2,
wobei die farbgebende Beschichtung 2 vorzugsweise durch eine Lackschicht oder eine Lackfolie gebildet ist, wobei die farbgebende Beschichtung 2 die Spektralbereiche des sichtbaren Lichts weitestgehend absorbiert.

Zur Durchleuchtung des Grundkörpers 1 weist die farbgebende Beschichtung 2 bereichsweise eine Vielzahl von punktförmigen Perforationen 3, 3', 3" auf, die die farbgebende Beschichtung 2 vollständig durchdringen. Über der perforierten farbgebenden Beschichtung 2 ist eine die farbgebende Beschichtung 2 und die Perforationen 3, 3', 3" versiegelnde Klarlackschicht 4, welche für Spektralbereiche des sichtbaren Lichts mit einer geringen Absorption durchstrahlbar ist, aufgebracht. Die punktförmigen Perforationen 3, 3', 3" ermöglichen es, dass das Verkleidungsteil bzw. der Grundkörper 1 des Verkleidungsteils durchleuchtbar ist und so Bereiche des Verkleidungsteils eine optische oder eine Signalfunktion übernehmen können. Als Beispiele angedeutet sind hier ein Seitenblinker oder eine Seitenmarkierungsleuchte, ein Tagfahrlicht oder Frontscheinwerfer und ein Markenemblem des Herstellers des Kraftfahrzeuges V.

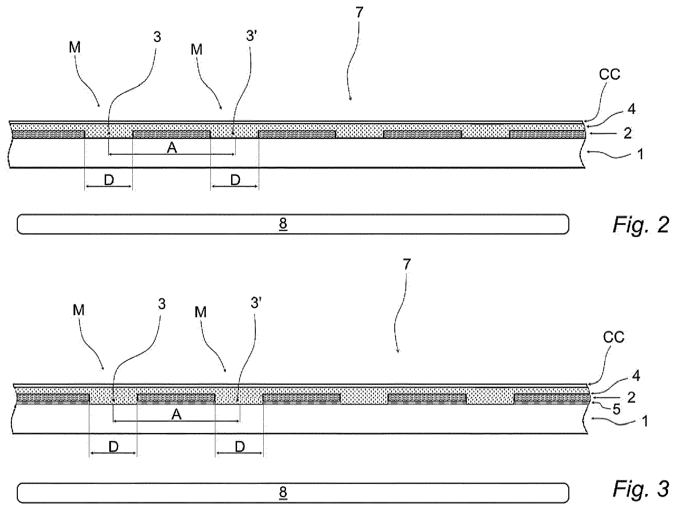

In den Fig. 2 und Fig. 3 ist der Aufbau des erfindungsgemäßen Verkleidungsteils bzw. eines erfindungsgemäßen Systems dargestellt.

Das durchleuchtbare Verkleidungsteil für ein Kraftfahrzeug umfasst:
- einen Grundkörper 1 aus einem transluzenten oder transparenten Polymermaterial, welches für Spektralbereiche des sichtbaren Lichts mit einer geringen Absorption durchstrahlbar ist, und
- wenigstens eine auf dem Grundkörper 1 aufgebrachte farbgebende Beschichtung 2,
wobei die farbgebende Beschichtung 2 vorzugsweise durch eine Lackschicht oder eine Lackfolie gebildet ist, wobei die farbgebende Beschichtung 2 die Spektralbereiche des sichtbaren Lichts weitestgehend absorbiert. Zur Durchleuchtung des Grundkörpers 1 weist die farbgebende Beschichtung 2 bereichsweise eine Vielzahl von punktförmigen Perforationen 3, 3', 3" auf, die die farbgebende Beschichtung 2 vollständig durchdringen. Über der perforierten farbgebenden Beschichtung 2 ist eine die farbgebende Beschichtung 2 und die Perforationen 3, 3', 3" versiegelnde Klarlackschicht 4, welche für Spektralbereiche des sichtbaren Lichts mit einer geringen Absorption durchstrahlbar ist, aufgebracht. Für die Klarlackschicht 4 ist ein Klarlacksystem verwendet, dessen Anteil an flüchtigen Lösemitteln unterhalb von 35 Vol.% liegt, wobei das Klarlacksystem ein UV-härtendes Klarlacksystem ist.

Die Dicke der Klarlackschicht liegt im Bereich von 30 µm bis 150 µm, bevorzugt im Bereich von 40 µm bis 150 µm, bevorzugt im Bereich von 70 µm bis 110 µm, bevorzugt im Bereich von 50 µm bis 130 µm, weiter bevorzugt im Bereich von 70 µm bis 110 µm.

In Fig. 2 und Fig. 3 ist dargestellt, dass über der Klarlackschicht 4 eine weitere Klarlackschicht CC angeordnet ist, wobei für die weitere Klarlackschicht CC ein weiteres Klarlacksystem verwendet ist, dessen Anteil an flüchtigen Lösemitteln oberhalb von 45 Vol.% liegt.

Der Durchmesser D der Perforationen 3, 3', 3" liegt in einem Bereich von 50 µm bis 500 µm, bevorzugt in einem Bereich von 175 µm bis 300 µm, und der Abstand A zwischen den Mittelpunkten M zueinander benachbarter Perforationen 3, 3', 3" liegt in einem Bereich zwischen dem 1,0-fachen bis 5,0-fachen, bevorzugt in einem Bereich zwischen dem 1,5-fachen bis 4,0-fachen des Durchmessers D der benachbarten Perforationen 3, 3', 3", sodass die Klarlackschicht 4 zusätzlich die Perforationen 3, 3', 3" ausfüllt.

Bei dem gezeigten erfindungsgemäßen System ist hinter der bestimmungsgemäßen Sichtseite 7 des Grundkörpers 1 ein Leuchtelement 8 angeordnet, wobei das Leuchtelement vorzugsweise ein Leuchtelement 8 mit einer Mindestleuchtstärke von 500 cd/m² ist.

Im Unterschied zu Fig. 2 ist oder sind bei dem in Fig. 3 dargestellten Verkleidungsteil bzw. System zwischen dem Grundkörper 1 und der farbgebenden Beschichtung 2 zusätzlich eine Haftvermittlerschicht 5 oder Haftvermittlerschichten angeordnet. Die Vielzahl von punktförmigen Perforationen 3, 3', 3" durchdringen auch die Haftvermittlerschicht 5 oder die Haftvermittlerschichten vollständig.

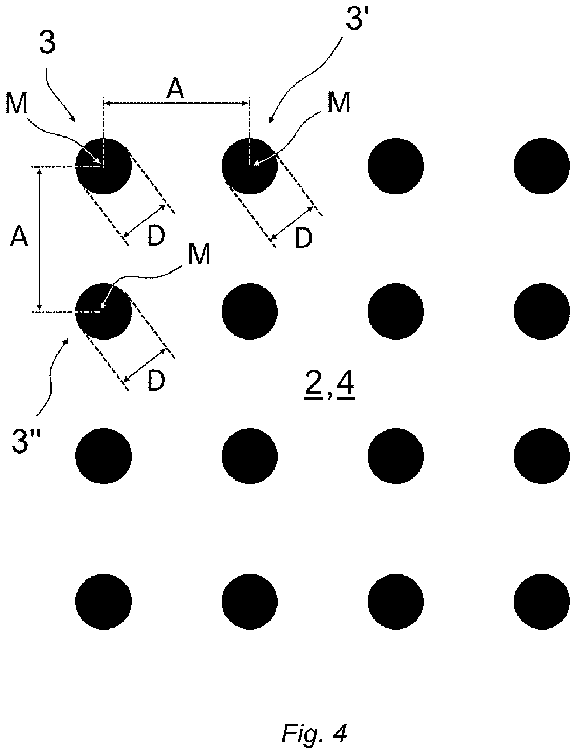

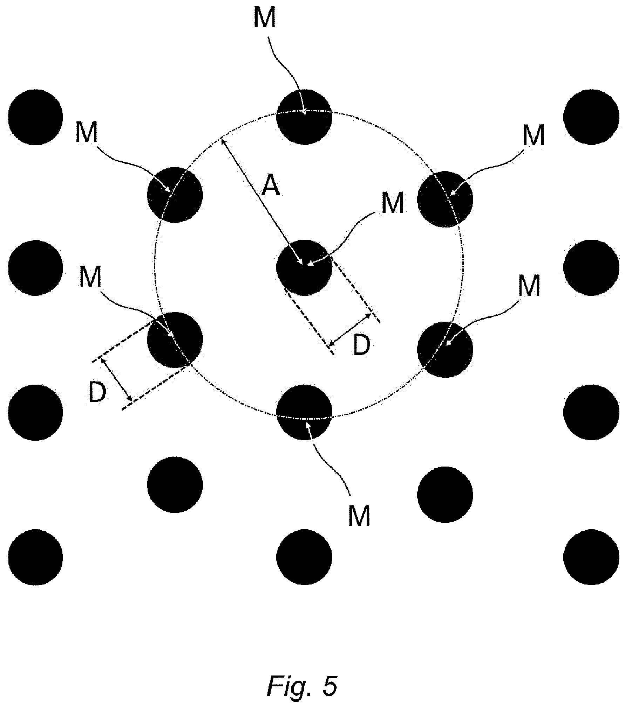

In Fig. 4 und in Fig. 5 sind jeweils in vergrößerten Draufsichten auf die Sichtseite 7 eines Verkleidungteils dargestellt, dass erfindungsgemäß der Durchmesser D der Perforationen 3, 3', 3" des vorstehend in Fig. 1 beschriebenen Verkleidungsteils in einem Bereich von 50 µm bis 500 µm, bevorzugt in einem Bereich von 175 µm bis 300 µm, liegt und hierbei der Abstand A zwischen den Mittelpunkten M zueinander benachbarter Perforationen 3, 3', 3" in einem Bereich zwischen dem 1,0-fachen bis 5,0-fachen, bevorzugt in einem Bereich zwischen dem 1,5-fachen bis 4,0-fachen des Durchmessers D der benachbarten Perforationen 3, 3', 3" liegt, sodass die Klarlackschicht 4 zusätzlich die Perforationen 3, 3', 3" ausfüllt. In Fig. 5 sind die Perforationen 3, 3', 3" im Vergleich zu den Perforationen 3, 3', 3" in Fig. 4 ebenfalls gleichmäßig, jedoch zueinander versetzt angeordnet. Eine derartige versetzte Anordnung liefert in einigen Anwendungsfällen einen weiter verbesserten optischen Eindruck, wenn sichtbares Licht das Verkleidungsteil durchdringt.

Für alle vorstehend beschriebenen Ausführungsbeispiele in den Fig. 1 bis 4 gilt gleichermaßen, dass das transluzente oder transparente Polymermaterial des Grundkörpers 1 Polypropylen und/oder Polycarbonat und/oder Polyethylenterephthalat und/oder Polycarbonat und/oder Acrylnitril-Butadien-Styrol und/oder Polymethylmethacrylat und/oder Polyamid enthält oder hieraus gebildet sein kann.

Das transluzente oder transparente Polymermaterial des Grundkörpers 1 kann ein für wenigstens eine Laserwellenlänge transparentes Material sein.

Der Grundkörper 1 weist bevorzugt eine Wandstärke im Bereich von 0,8 mm bis 4,5 mm auf.

Das Verkleidungsteil kann neben einer in Fig. 1 gezeigten Stoßfängerverkleidung auch eine Heckklappenverkleidung oder eine Kühlerverkleidung oder eine Säulenverkleidung oder eine Türverkleidung oder eine Kotflügelverkleidung oder eine Dachverkleidung oder ein Spoiler eines Kraftfahrzeuges, oder ein Bauteil oder eine Baugruppe oder ein Bestandteil der vorgenannten Teile sein.

Ein Verfahren zur Herstellung eines durchleuchtbaren Verkleidungsteils gemäß den vorstehenden Ausführungsbeispielen, oder gemäß einem der Ansprüche 1 bis 6 kann wie folgt charakterisiert sein.

Verfahren zur Herstellung eines durchleuchtbaren Verkleidungsteils umfassend die folgenden Schritte:
- Bereitstellen eines Grundkörpers 1 aus einem transluzenten oder transparenten Polymermaterial, welches für Spektralbereiche des sichtbaren Lichts mit einer geringen Absorption durchstrahlbar ist, und
- Aufbringen wenigstens einer farbgebenden Beschichtung 2 auf dem Grundkörper 1, wobei die farbgebende Beschichtung 2 vorzugsweise durch eine Lackschicht oder eine Lackfolie gebildet ist, wobei die farbgebende Beschichtung 2 die Spektralbereiche des sichtbaren Lichts weitestgehend absorbiert,
- Einbringen einer Vielzahl von punktförmigen Perforationen 3, 3', 3" in die farbgebende Beschichtung 2, die die farbgebende Beschichtung 2 vollständig durchdringen um eine Durchleuchtung des Grundkörpers 1 zu ermöglichen,
- Aufbringen einer die farbgebende Beschichtung 2 und die eingebrachten Perforationen 3, 3', 3" versiegelnden Klarlackschicht 4 über der perforierten farbgebenden Beschichtung 2, wobei die Klarlackschicht 4 für Spektralbereiche des sichtbaren Lichts mit einer geringen Absorption durchstrahlbar ist,
wobei für die Klarlackschicht 4 ein Klarlacksystem verwendet wird, dessen Anteil an flüchtigen Lösemitteln unterhalb von 35 Vol.% liegt.

Wie in Fig. 2 und Fig. 3 gezeigt, kann über der Klarlackschicht 4 eine weitere Klarlackschicht CC angeordnet werden, wobei für die weitere Klarlackschicht CC ein weiteres Klarlacksystem verwendet wird, dessen Anteil an flüchtigen Lösemitteln oberhalb von 45 Vol.% liegt.

Der Schritt des Einbringens der punktförmigen Perforationen 3, 3', 3" kann mittels eines Laserstrahls oder mittels mehrerer Laserstrahlen erfolgen.

Der Schritt des Bereitstellens des Grundkörpers 1 kann ein Spritzgussverfahren oder ein Thermoformungsverfahren umfassen.

## Patentansprüche

1. Durchleuchtbares Verkleidungsteil für ein Kraftfahrzeug (V) umfassend:
- einen Grundkörper (1) aus einem transluzenten oder transparenten Polymermaterial, welches für Spektralbereiche des sichtbaren Lichts mit einer geringen Absorption durchstrahlbar ist, und
- wenigstens eine auf dem Grundkörper (1) aufgebrachte farbgebende Beschichtung (2),
wobei die farbgebende Beschichtung (2) vorzugsweise durch eine Lackschicht oder eine Lackfolie gebildet ist, wobei die farbgebende Beschichtung (2) die Spektralbereiche des sichtbaren Lichts weitestgehend absorbiert und,
wobei zur Durchleuchtung des Grundkörpers (1) die farbgebende Beschichtung (2) bereichsweise eine Vielzahl von, vorzugsweise punktförmigen, Perforationen (3, 3', 3") aufweist, die die farbgebende Beschichtung (2) vollständig durchdringen und,
wobei über der perforierten farbgebenden Beschichtung (2) eine die farbgebende Beschichtung (2) und die Perforationen (3, 3', 3") versiegelnde Klarlackschicht (4), welche für Spektralbereiche des sichtbaren Lichts mit einer geringen Absorption durchstrahlbar ist, aufgebracht ist,
**dadurch gekennzeichnet, dass**
für die Klarlackschicht (4) ein Klarlacksystem verwendet ist, dessen Anteil an flüchtigen Lösemitteln unterhalb von 35 Vol.% liegt.

2. Durchleuchtbares Verkleidungsteil nach Anspruch 1, **dadurch gekennzeichnet, dass** die Dicke der Klarlackschicht (4) im Bereich von 30 µm bis 150 µm, bevorzugt im Bereich von 40 µm bis 150 µm, bevorzugt im Bereich von 70 µm bis 110 µm, bevorzugt im Bereich von 50 µm bis 130 µm, weiter bevorzugt im Bereich von 70 µm bis 110 µm liegt.

3. Durchleuchtbares Verkleidungsteil nach einem der vorstehenden Ansprüche 1 oder 2, **dadurch gekennzeichnet, dass** das Klarlacksystem ein UV-härtendes Klarlacksystem ist.

4. Durchleuchtbares Verkleidungsteil nach einem der vorstehenden Ansprüche, **dadurch gekennzeichnet, dass** über der Klarlackschicht (4) eine weitere Klarlackschicht (CC) angeordnet ist, wobei für die weitere Klarlackschicht (CC) ein weiteres Klarlacksystem verwendet ist, dessen Anteil an flüchtigen Lösemitteln oberhalb von 40 Vol.% liegt, bevorzugt oberhalb von 45 Vol.% liegt.

5. Durchleuchtbares Verkleidungsteil nach einem der vorstehenden Ansprüche, **dadurch gekennzeichnet, dass** das transluzente oder transparente Polymermaterial des Grundkörpers (1) Polypropylen und/oder Polycarbonat und/oder Polyethylenterephthalat und/oder Polycarbonat und/oder Acrylnitril-Butadien-Styrol und/oder Polymethylmethacrylat und/oder Polyamid enthält oder hieraus gebildet ist.

6. Durchleuchtbares Verkleidungsteil nach einem der vorstehenden Ansprüche, **dadurch gekennzeichnet, dass** das Verkleidungsteil ein Außenverkleidungsteil ist, insbesondere eine Stoßfängerverkleidung oder Kühlerverkleidung oder eine Heckklappenverkleidung oder eine Säulenverkleidung oder eine Türverkleidung oder eine Kotflügelverkleidung oder eine Dachverkleidung oder ein Spoiler eines Kraftfahrzeuges, oder ein Bauteil oder eine Baugruppe oder ein Bestandteil der vorgenannten Teile ist.

7. System aus einem durchleuchtbaren Verkleidungsteil nach einem der vorstehenden Ansprüche und einem hinter der bestimmungsgemäßen Sichtseite (7) des Grundkörpers (1) angeordneten Leuchtelement (8), wobei das Leuchtelement vorzugsweise ein Leuchtelement (8) mit einer Mindestleuchtstärke von 500 cd/m² ist.

8. Verfahren zur Herstellung eines durchleuchtbaren Verkleidungsteils, insbesondere eines durchleuchtbaren Verkleidungsteils nach einem der vorstehenden Ansprüche 1 bis 6, umfassend die folgenden Schritte:
- Bereitstellen eines Grundkörpers (1) aus einem transluzenten oder transparenten Polymermaterial, welches für Spektralbereiche des sichtbaren Lichts mit einer geringen Absorption durchstrahlbar ist, und
- Aufbringen wenigstens einer farbgebenden Beschichtung (2) auf dem Grundkörper (1), wobei die farbgebende Beschichtung (2) vorzugsweise durch eine Lackschicht oder eine Lackfolie gebildet ist, wobei die farbgebende Beschichtung (2) die Spektralbereiche des sichtbaren Lichts weitestgehend absorbiert,
- Einbringen einer Vielzahl von, vorzugsweise punktförmigen, Perforationen (3, 3', 3") in die farbgebende Beschichtung (2), die die farbgebende Beschichtung (2) vollständig durchdringen um eine Durchleuchtung des Grundkörpers (1) zu ermöglichen,
- Aufbringen einer die farbgebende Beschichtung (2) und die eingebrachten Perforationen (3, 3', 3") versiegelnden Klarlackschicht (4) über der perforierten farbgebenden Beschichtung (2), wobei die Klarlackschicht (4) für Spektralbereiche des sichtbaren Lichts mit einer geringen Absorption durchstrahlbar ist,
**dadurch gekennzeichnet, dass**
für die Klarlackschicht (4) ein Klarlacksystem verwendet wird, dessen Anteil an flüchtigen Lösemitteln unterhalb von 35 Vol.% liegt.

9. Verfahren zur Herstellung eines durchleuchtbaren Verkleidungsteils nach Anspruch 8, **dadurch gekennzeichnet, dass** über der Klarlackschicht (4) eine weitere Klarlackschicht (CC) angeordnet wird, wobei für die weitere Klarlackschicht (CC) ein weiteres Klarlacksystem verwendet wird, dessen Anteil an flüchtigen Lösemitteln oberhalb von 40 Vol.% liegt, bevorzugt oberhalb von 45 Vol.% liegt.

10. Verfahren zur Herstellung eines durchleuchtbaren Verkleidungsteils nach Anspruch 8 oder 9, **dadurch gekennzeichnet, dass** der Schritt des Bereitstellens des Grundkörpers (1) ein Spritzgussverfahren oder ein Thermoformungsverfahren umfasst.
